# FASCICULE DE BREVET EUROPEEN

(11) **EP 3 076 829 B1**
(45) Date de publication et mention de la délivrance du brevet: **31.01.2018**
(21) Numéro de dépôt: 14821782.1
(22) Date de dépôt: 02.12.2014
(51) Int. Cl.: A47J 27/62, A47J 37/10

(54) **RECIPIENT DE CUISSON MUNI D'UN CAPTEUR DE TEMPERATURE ET DE MOYENS D'IDENTIFICATION D'UNE ZONE DE CUISSON**
KOCHBEHÄLTER MIT EINEM TEMPERATURFÜHLER UND VORRICHTUNG ZUR IDENTIFIZIERUNG EINES KOCHBEREICHS
COOKING CONTAINER PROVIDED WITH A TEMPERATURE SENSOR AND MEANS FOR IDENTIFYING A COOKING AREA

(30) Priorité: 05.12.2013 FR 1362201
(43) Date de publication de la demande: 12.10.2016
(73) Titulaire: SEB S.A., 69130 Ecully (FR)
(72) Inventeur: LINGLIN, Benoît, 74370 Saint Martin Bellevue (FR)
(74) Mandataire: Bourrières, Patrice
(86) Numéro de dépôt international: PCT/FR2014/053129
(87) Numéro de publication internationale: WO 2015/082830

(56) Documents cités:
- EP-A1- 0 931 495
- US-A- 5 620 255

## Description

La présente invention concerne un récipient de cuisson destiné à la cuisson d'aliments notamment une poêle, une casserole, une sauteuse, un faitout ou un autocuiseur comportant un capteur de température permettant de mesurer la température de cuisson.

On connaît du document EP0931495 un récipient de cuisson comportant un fond et une paroi latérale, un capteur de température intégré dans le fond et relié à un circuit électronique pour traiter la grandeur mesurée par le capteur et afficher la température. Ainsi, l'utilisateur peut suivre la température du fond pendant la cuisson d'un aliment.

Cependant, l'utilisateur peut placer dans le récipient un aliment à cuire qui occupe uniquement une partie du fond. Lors de la dépose de cet aliment, si le récipient a été préchauffé, la température chute de manière plus importante dans cette partie que dans le reste du fond qui ne reçoit pas d'aliments. Ainsi, si le capteur de température n'est pas situé dans la partie du fond qui reçoit l'aliment à cuire, la température affichée ne correspond pas à la température réelle à laquelle est soumis l'aliment à cuire.

De plus, la température du fond n'est pas homogène, ceci étant essentiellement dû au moyen de chauffage utilisé et à la construction du récipient de cuisson. La demanderesse a mis en évidence que l'écart maximum de température dans le fond d'un récipient de cuisson préchauffé autour de 250°C pouvait atteindre 60°C. Ainsi, l'écart entre la température affichée et la température réelle à laquelle est soumis l'aliment à cuire peut encore être accru.

Le but de la présente invention est de remédier aux inconvénients précités et de proposer un récipient de cuisson muni d'un capteur de température qui permette de garantir le résultat de cuisson d'un aliment.

Un autre but de l'invention est de proposer un récipient de cuisson muni d'un capteur de température qui soit de conception simple et économique à mettre en oeuvre.

Ces buts sont atteints avec un récipient de cuisson comportant un fond muni d'un capteur de température relié électriquement à des moyens de traitement du signal et d'affichage déportés caractérisé en ce que le fond du récipient de cuisson comporte des moyens d'identification d'une zone de dépose des aliments à cuire, ladite zone étant agencée en vis-à-vis du capteur de température pour permettre à l'utilisateur de suivre la température de cuisson desdits aliments

Par la zone étant agencée en vis-à-vis du capteur de température, on comprend que la zone est agencée à l'aplomb de la partie active de mesure du capteur de température lorsque le récipient de cuisson repose sur un moyen de chauffage.

L'utilisateur peut facilement déposer l'aliment à cuire dans la zone identifiée, qui est agencée à l'aplomb du capteur de température. Ainsi le capteur de température est très proche de l'aliment à cuire et les informations affichées sur les moyens d'affichage déportés reflètent fidèlement l'évolution de la température de l'aliment. En conséquence, l'utilisateur peut sans difficulté réussir la cuisson de l'aliment en suivant les informations affichées sur les moyens d'affichage déportés.

De préférence, les moyens d'identification comportent un marquage.

Cette disposition permet d'obtenir une zone de dépose des aliments à cuire bien visible par l'utilisateur.

Avantageusement, le marquage forme une figure comportant un centre, ledit centre étant à l'aplomb du capteur de température.

Ainsi l'aliment déposé sur le marquage est centré sur le capteur de température.

Avantageusement, le marquage comporte au moins une surface colorée.

Par surface colorée, on comprend que le marquage présente une couleur différente de la couleur du fond. Avantageusement la couleur est de préférence choisie pour présenter un contraste important avec la couleur du fond. Ainsi, la zone de dépose des aliments à cuire est très facile à identifier par l'utilisateur.

Avantageusement, le marquage comporte au moins un trait.

Avantageusement, le trait forme le périmètre d'un cercle.

Avantageusement, le marquage comporte au moins une lettre.

Cette disposition permet d'obtenir un marquage comportant un mot permettant de faire comprendre à l'utilisateur la fonction particulière de suivi de cuisson agencée dans le récipient de cuisson

Avantageusement, le marquage comporte au moins un pictogramme.

Par pictogramme, on comprend une représentation graphique schématique, un dessin figuratif stylisé ayant fonction de signe. Ainsi, un marquage comportant un pictogramme permet également de faire comprendre à l'utilisateur la fonction particulière de suivi de cuisson agencée dans le récipient de cuisson. De plus, l'utilisation d'un pictogramme permet de vendre le même récipient de cuisson dans des marchés ayant des langues différentes.

De préférence, le marquage est réalisé par un procédé de dépôt d'encres, notamment la sérigraphie ou la tampographie.

Cette disposition permet d'obtenir un marquage par un procédé économique, qui peut être inséré facilement dans le procédé de fabrication automatisé d'un récipient de cuisson. De plus, le dépôt d'encre ayant une épaisseur très faible, le fond du récipient de cuisson muni du marquage présente une surface plane et lisse.

Avantageusement, le capteur de température est agencé au centre du fond et les moyens d'identification sont agencés par conséquent au centre du fond.

Cette disposition permet d'obtenir une utilisation intuitive de la fonction de suivi de cuisson agencée dans le récipient de cuisson, l'utilisateur déposant naturellement l'aliment à cuire au centre du fond.

De préférence, le capteur de température est agencé de manière déportée par rapport au centre du fond et les moyens d'identification sont agencés par conséquent de manière déportée par rapport au centre du fond.

La demanderesse a mis en évidence qu'il était intéressant économiquement de réaliser un même sous-ensemble capteur, voir un sous-ensemble poignée muni du capteur de température pour une gamme de récipients de cuisson par exemple de diamètres croissants. Le sous-ensemble comporte une distance fixe entre le capteur de température et l'extrémité de fixation de la poignée sur la paroi latérale du récipient de cuisson. Ainsi, pour une partie des récipients de cuisson dont le rayon est différent de la distance d, les moyens d'identification sont agencés de manière déportée par rapport au centre du fond. En conséquence, l'utilisateur peut placer son aliment à cuire de manière déportée du centre du fond pour être à l'aplomb du capteur de température pour ces récipients de cuisson.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective du dessous d'un récipient de cuisson selon un mode particulier de réalisation de l'invention.
- La figure 2 illustre une vue en perspective du dessus du récipient de cuisson illustré à la figure 1.
- La figure 3 illustre une vue schématique du dessus du fond du récipient de cuisson illustré sur la figure 2, le marquage étant réalisé selon un autre mode particulier de réalisation de l'invention.
- La figure 4 illustre une vue schématique du dessus du fond du récipient de cuisson illustré sur la figure 2, le marquage étant réalisé selon un autre mode particulier de réalisation de l'invention.
- La figure 5 illustre une vue schématique du dessus du fond du récipient de cuisson illustré sur la figure 2, le marquage étant réalisé selon un autre mode particulier de réalisation de l'invention.
- La figure 6 illustre une vue schématique du dessus du fond d'un récipient de cuisson de la même gamme que le récipient de cuisson illustré sur la figure 5, mais de plus gros diamètre.

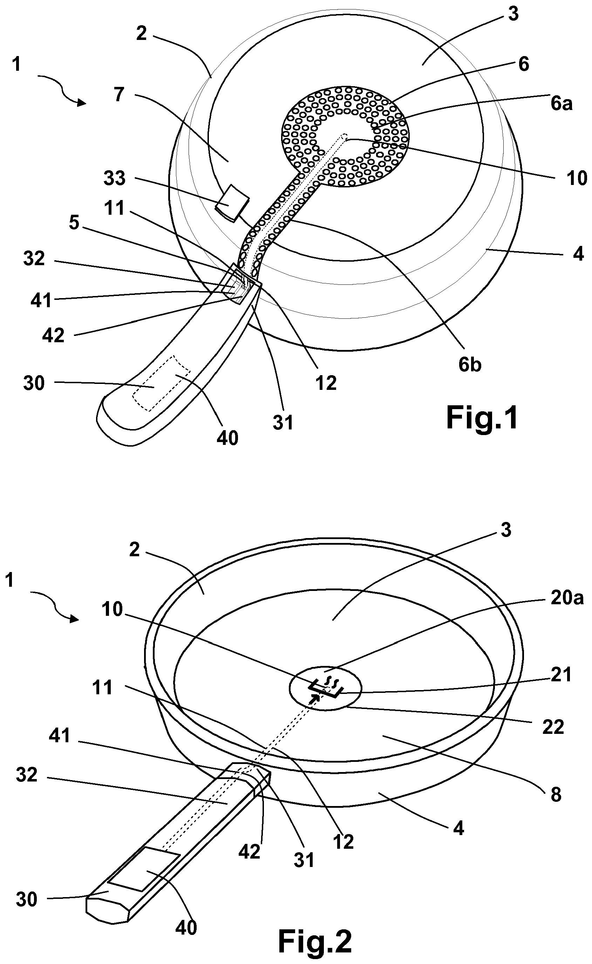

Selon un mode de réalisation visible à la figure 1, un récipient de cuisson 1 comporte une calotte 2 comprenant un fond 3 et une paroi latérale 4. Le récipient de cuisson 1 comporte une plaque perforée 6 fixée sur une face externe 7 de la calotte 2 et un capteur de température 10 agencé entre la face externe 7 de la calotte 2 et la plaque perforée 6. Le capteur de température 10 peut notamment comporter une partie active formée par une thermistance à Coefficient de Température Négatif ou un thermocouple. Le capteur de température 10 est muni de deux éléments conducteurs 11, 12 qui sont reliées électriquement à des moyens de traitement du signal et d'affichage formés par un circuit électronique 40 pour traiter la grandeur mesurée par le capteur de température 10 et afficher la température ou des informations relatives à la température. Le capteur de température 10 s'étend radialement depuis le centre du fond 3 vers la paroi latérale 4. La plaque perforée 6 comporte une partie circulaire 6a qui recouvre le capteur de température 10 et une partie centrale de la surface extérieure du fond 3; et une partie allongée 6b qui recouvre les éléments conducteurs 11, 12 et s'étend radialement sur la surface extérieure du fond 3 ainsi que partiellement sur la surface extérieure de la paroi latérale 4.

La calotte 2 du récipient de cuisson est réalisée à partir d'un disque d'aluminium d'épaisseur comprise entre 2 et 6 millimètres, le disque comportant une rainure 5. La plaque perforée 6 munie du capteur de température 10 et des éléments conducteurs 11, 12 est positionnée sur le disque de manière à ce que le capteur de température 10 soit positionné dans la rainure 5 puis la plaque perforée 6 est fixée sur le disque par une opération de frappe. Pour comprendre le procédé de fixation de la plaque perforée 6 sur le disque 2a, on se rapportera à la description des brevets français n°FR2693894 et n°FR2711051 déposés par la demanderesse. Le disque ainsi muni de la grille perforée 6 et du capteur de température 10 est mis en forme par une opération de frappe pour constituer la calotte 2 du récipient de cuisson 1.

Conformément aux figures 1 et 2, le récipient de cuisson 1 comporte une poignée 30 dont une extrémité 31 est fixée sur la paroi latérale 4 par des moyens de fixation (non représentés sur les figures). Le circuit électronique 40 est agencé dans la poignée 30 et est relié électriquement aux éléments conducteurs 11, 12 par deux bornes 41, 42. L'extrémité 31 de la poignée 30 comporte un logement 32 dans lequel les éléments conducteurs 11, 12 sont reliées aux bornes 41, 42, par exemple par soudage. Le logement 32 est fermé par un capot 33 (représenté en éclaté sur la figure 1).

Tel que visible à la figure 2, le récipient de cuisson 1 comporte une face interne 8 qui comprend un marquage 20a qui est agencé à l'aplomb du capteur de température 10. Le marquage 20a forme un moyen d'identification d'une zone de dépose des aliments à cuire dans le récipient de cuisson 1. Le marquage 20a comporte un pictogramme 21 figurant de manière symbolique un récipient de cuisson chauffé et une flèche indiquant la zone de dépose. Le marquage 20a comporte également une ligne 22 formant le périmètre d'un cercle. Le cercle comporte un centre agencé à l'aplomb du capteur de température 10. Dans ce mode de réalisation où le capteur de température 10 est agencé au centre du fond 3, le marquage 20a est également positionné au centre du fond 3.

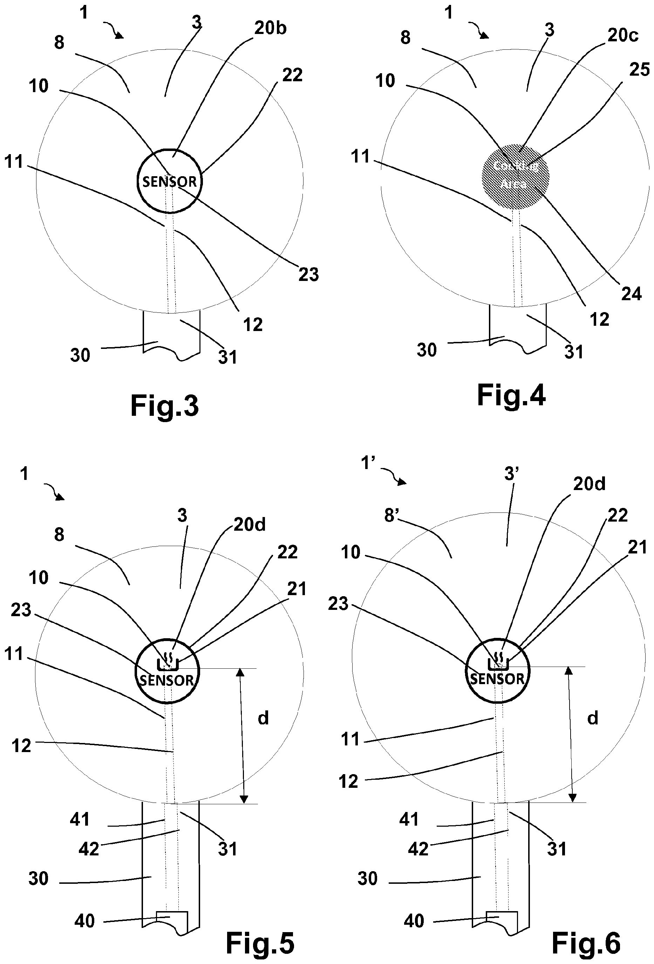

La figure 3 illustre une vue schématique du dessus du fond 3 du récipient de cuisson 1. Le fond 3 comporte un marquage 20b selon un autre mode particulier de réalisation de l'invention. Le marquage 20b comporte plusieurs lettres 23 formant le mot SENSOR pour évoquer à l'utilisateur la présence du capteur de température 10. De la même manière que pour le marquage 20a, le marquage 20b comporte également une ligne 22 formant le périmètre d'un cercle.

La figure 4 illustre également une vue schématique du dessus du fond 3 du récipient de cuisson 1. Le fond 3 comporte un marquage 20c selon un autre mode particulier de réalisation de l'invention. Le marquage 20c comporte une surface colorée 24 en forme de cercle. La surface colorée 24 comporte des zones en réserve en forme de lettres 25 pour réaliser les mots Cooking et Area et ainsi indiquer à l'utilisateur la zone de dépose de l'aliment à cuire.

Tel que visible sur la figure 5, le fond 3 du récipient de cuisson 1 comporte un marquage 20d selon un autre mode particulier de réalisation de l'invention. Le marquage 20d comporte un pictogramme 21, plusieurs lettres 23 formant le mot SENSOR et une ligne 22 formant le périmètre d'un cercle.

Le capteur de température 10 muni des éléments conducteurs 11, 12, éventuellement placés dans une gaine tubulaire, forment un sous-ensemble capteur. Le capteur de température 10 est agencé à une première extrémité du sous-ensemble capteur. Une deuxième extrémité du sous-ensemble capteur forme une zone de jonction entre les éléments conducteurs 11, 12 et les bornes 41, 42 du circuit électronique 40, la zone de jonction étant agencée à l'extrémité 31 de la poignée 30. Le sous-ensemble capteur est le même pour une gamme de récipients de cuisson de diamètre différent. Ainsi, la distance d du capteur de température 10 à la zone de jonction est la même pour tous les récipients de la gamme.

Le récipient de cuisson 1 de la gamme comporte un marquage 20d centré par rapport au fond 3, à l'aplomb du capteur de température lui-même agencé au centre du fond 3. La distance d est sensiblement égale au rayon du fond 3.

Conformément à la figure 6, un récipient de cuisson 1' de la même gamme que le récipient de cuisson 1 présente un diamètre d'un fond 3' supérieur au fond 3. Le fond 3' comporte le marquage 20d agencé sur une face interne 8'. Le récipient de cuisson 1' comporte le même sous-ensemble capteur que le récipient de cuisson 1. Le capteur de température 10 est agencé à la distance d de la zone de jonction située à l'extrémité 31 de la poignée 30. Ainsi, le marquage 20d qui est à l'aplomb du capteur de température 10, se trouve déporté vers la poignée.

En fonctionnement, l'utilisateur pose le récipient de cuisson 1 sur le moyen de chauffage et préchauffe la calotte 2 à une température que l'utilisateur peut suivre sur les moyens de traitement du signal et d'affichage formés par le circuit électronique 40. Une fois la température de préchauffe atteinte, l'utilisateur place l'aliment à cuire sur le marquage 20a situé au centre du fond 3 et à l'aplomb du capteur de température 10. L'utilisateur peut ensuite suivre la cuisson de l'aliment en surveillant les indications fournies par le circuit électronique 40 relié au capteur de température 10 situé au plus près de l'aliment, le circuit électronique 40 pouvant comporter une alarme sonore pour alerter l'utilisateur du dépassement d'une température de consigne.

Si l'utilisateur utilise le récipient de cuisson 1', une fois la température de préchauffe atteinte, l'utilisateur place l'aliment à cuire sur le marquage 20d situé de manière déportée par rapport au centre du fond 3' et à l'aplomb du capteur de température 10.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le marquage peut comporter des parties en creux ou en relief. Ces parties en creux ou en relief sont de préférence réalisées par frappe du fond lors de la mise en forme du récipient de cuisson.

Dans une autre variante de réalisation, les moyens d'identification d'une zone de dépose des aliments à cuire comportent un dispositif d'émission d'un rayon lumineux qui peut, avantageusement, être agencé sur la poignée. Le rayon lumineux est dirigé vers le fond du récipient de cuisson pour former une zone éclairée à l'aplomb du capteur de température qui définit la zone de dépose des aliments à cuire.

## Revendications

1. Récipient de cuisson (1, 1') comportant un fond (3, 3') muni d'un capteur de température (10) relié électriquement à des moyens de traitement du signal et d'affichage (40) déportés dudit capteur de température (10) **caractérisé en ce que** le fond (3, 3') du récipient de cuisson comporte des moyens d'identification (20a, 20b, 20c, 20d) d'une zone de dépose des aliments à cuire, ladite zone étant agencée en vis-à-vis du capteur de température (10) pour permettre à l'utilisateur de suivre la température de cuisson desdits aliments.

2. Récipient de cuisson (1, 1') selon la revendication 1, **caractérisé en ce que** les moyens d'identification comportent un marquage (20a, 20b, 20c, 20d).

3. Récipient de cuisson (1, 1') selon la revendication 2, **caractérisé en ce que** le marquage (20a, 20b, 20c, 20d) forme une figure comportant un centre, ledit centre étant à l'aplomb du capteur de température (10).

4. Récipient de cuisson (1, 1') selon l'une des revendications 2 à 3, **caractérisé en ce que** le marquage (20c) comporte au moins une surface colorée (24).

5. Récipient de cuisson (1, 1') selon l'une des revendications 2 à 4, **caractérisé en ce que** le marquage (20a, 20b, 20c, 20d) comporte au moins un trait (22).

6. Récipient de cuisson (1, 1') selon la revendication 5, **caractérisé en ce que** le trait forme le périmètre (22) d'un cercle.

7. Récipient de cuisson (1, 1') selon l'une des revendications 2 à 6, **caractérisé en ce que** le marquage (20b, 20c, 20d) comporte au moins une lettre (23, 25).

8. Récipient de cuisson (1, 1') selon l'une des revendications 2 à 7, **caractérisé en ce que** le marquage (20a, 20d) comporte au moins un pictogramme (21).

9. Récipient de cuisson (1, 1') selon l'une des revendications 2 à 8, **caractérisé en ce que** le marquage (20a, 20b, 20c, 20d) est réalisé par un procédé de dépôt d'encres, notamment la sérigraphie ou la tampographie.

10. Récipient de cuisson (1) selon l'une des revendications 1 à 9, **caractérisé en ce que** le capteur de température (10) est agencé au centre du fond (3) et les moyens d'identification (20a, 20b, 20c, 20d) sont agencés par conséquent au centre du fond (3).

11. Récipient de cuisson (1') selon l'une des revendications 1 à 9, **caractérisé en ce que** le capteur de température (10) est agencé de manière déportée par rapport au centre du fond (3') et les moyens d'identification (20d) sont agencés par conséquent de manière déportée par rapport au centre du fond (3').

12. Récipient de cuisson (1, 1') selon l'une des revendications 1 à 11, **caractérisé en ce qu'**il est une poêle, une casserole, une sauteuse, un faitout ou un autocuiseur.

## Patentansprüche

1. Kochgefäß (1, 1'), das einen Boden (3, 3') aufweist, der mit einem Temperatursensor (10) versehen ist, der mit Mitteln zur Signalverarbeitung und Anzeige (40) elektrisch verbunden ist, die von dem Temperatursensor (10) entfernt sind, **dadurch gekennzeichnet, dass** der Boden (3, 3') des Kochgefäßes Mittel zur Identifizierung (20a, 20b, 20c, 20d) eines Bereichs zum Ablegen der zu kochenden Speisen aufweist, wobei der Bereich gegenüber dem Temperatursensor (10) angeordnet ist, um es dem Nutzer zu ermöglichen, die Kochtemperatur der Speisen zu verfolgen.

2. Kochgefäß (1,1') nach Anspruch 1, **dadurch gekennzeichnet, dass** die Mittel zur Identifizierung eine Markierung (20a, 20b, 20c, 20d) aufweisen.

3. Kochgefäß (1,1') nach Anspruch 2, **dadurch gekennzeichnet, dass** die Markierung (20a, 20b, 20c, 20d) eine Figur bildet, die ein Zentrum aufweist, wobei das Zentrum senkrecht zu dem Temperatursensor (10) ist.

4. Kochgefäß (1, 1') nach einem der Ansprüche 2 bis 3, **dadurch gekennzeichnet, dass** die Markierung (20c) mindestens eine farbige Oberfläche (24) aufweist.

5. Kochgefäß (1, 1') nach einem der Ansprüche 2 bis 4, **dadurch gekennzeichnet, dass** die Markierung (20a, 20b, 20c, 20d) mindestens einen Strich (22) aufweist.

6. Kochgefäß (1, 1') nach Anspruch 5, **dadurch gekennzeichnet, dass** der Strich den Umfang (22) eines Kreises bildet.

7. Kochgefäß (1,1') nach einem der Ansprüche 2 bis 6, **dadurch gekennzeichnet, dass** die Markierung (20b, 20c, 20d) mindestens einen Buchstaben (23, 25) aufweist.

8. Kochgefäß (1, 1') nach einem der Ansprüche 2 bis 7, **dadurch gekennzeichnet, dass** die Markierung (20a, 20d) mindestens ein Piktogramm (21) aufweist.

9. Kochgefäß (1, 1') nach einem der Ansprüche 2 bis 8, **dadurch gekennzeichnet, dass** die Markierung (20a, 20b, 20c, 20d) durch ein Verfahren zur Farbabscheidung, insbesondere Siebdruck oder Tampondruck, umgesetzt wird.

10. Kochgefäß (1) nach einem der Ansprüche 1 bis 9, **dadurch gekennzeichnet, dass** der Temperatursensor (10) in der Mitte des Bodens (3) angeordnet ist, und dass die Mittel zur Identifizierung (20a, 20b, 20c, 20d) deshalb in der Mitte des Bodens (3) angeordnet sind.

11. Kochgefäß (1') nach einem der Ansprüche 1 bis 9, **dadurch gekennzeichnet, dass** der Temperatursensor (10) entfernt mit Bezug auf die Mitte des Bodens (3') angeordnet ist, und dass die Mittel zur Identifizierung (20d) deshalb entfernt von der Mitte des Bodens (3') angeordnet sind.

12. Kochgefäß (1, 1') nach einem der Ansprüche 1 bis 11, **dadurch gekennzeichnet, dass** es eine Pfanne, ein Topf, eine Sauteuse, ein Schmortopf oder ein Schnellkochtopf ist.

## Claims

1. Cooking receptacle (1, 1') comprising a base (3, 3') provided with a temperature sensor (10) electrically connected to signal-processing and display means (40) offset from said temperature sensor (10), **characterised in that** the base (3, 3') of the cooking receptacle comprises means for identifying (20a, 20b, 20c, 20d) an area for depositing food to be cooked, said area being arranged opposite the temperature sensor (10) in order to enable the user to monitor the cooking temperature of said food.

2. Cooking receptacle (1, 1') according to claim 1, **characterised in that** the identification means comprise a marking (20a, 20b, 20c, 20d).

3. Cooking receptacle (1, 1') according to claim 2, **characterised in that** the marking (20a, 20b, 20c, 20d) forms a figure comprising a centre, said centre being vertically in line with the temperature sensor (10).

4. Cooking receptacle (1, 1') according to either claim 2 or claim 3, **characterised in that** the marking (20c) comprises at least one coloured surface (24).

5. Cooking receptacle (1, 1') according to any of claims 2 to 4, **characterised in that** the marking (20a, 20b, 20c, 20d) comprises at least one line (22).

6. Cooking receptacle (1, 1') according to claim 5, **characterised in that** the line forms the perimeter (22) of a circle.

7. Cooking receptacle (1, 1') according to any of claims 2 to 6, **characterised in that** the marking (20b, 20c, 20d) comprises at least one letter (23, 25).

8. Cooking receptacle (1, 1') according to any of claims 2 to 7, **characterised in that** the marking (20a, 20b) comprises at least one pictogram (21).

9. Cooking receptacle (1, 1') according to any of claims 2 to 8, **characterised in that** the marking (20a, 20b, 20c, 20d) is produced by an ink deposition method, in particular screen printing or pad printing.

10. Cooking receptacle (1) according to any of claims 1 to 9, **characterised in that** the temperature sensor (10) is arranged at the centre of the base (3) and the identification means (20a, 20b, 20c, 20d) are consequently arranged at the centre of the base (3).

11. Cooking receptacle (1') according to any of claims 1 to 9, **characterised in that** the temperature sensor (10) is arranged so as to be offset with respect to the centre of the base (3'), and the identification means (20d) are arranged consequently so as to be offset with respect to the centre of the base (3').

12. Cooking receptacle (1, 1') according to any of claims 1 to 11, **characterised in that** it is a frying pan, a saucepan, a saute pan, a stewpot or a pressure cooker.
